# EUROPEAN PATENT APPLICATION

(11) **EP 0 884 241 A1**
(43) Date of publication of application: **16.12.1998**
(21) Application number: 97204098.4
(22) Date of filing: 24.12.1997
(51) Int. Cl.: B64G 1/44, H01L 31/045

(54) **Solar panel assembly**

(71) Applicant: Fokker Space B.V., 2303 DB Leiden (NL)
(72) Inventor: Cruyssen, Johan Hendrik, 1406 JM Alphen aan de Rijn (NL); Van Daalen, Christiaan Jilles, 2136 AA Zwaanshoek (NL)
(74) Representative: de Bruijn, Leendert C.

(57) **Abstract**

Solar panel assembly (20) comprising a number of rectangular panels (21,22,23,24,25,26) each carrying solar cells on one of the two main surfaces. The panels are interconnected by mutually parallel primary hinges (41-45) such that the assembly from a first state, in which the panels are folded zigzag wise into a package, can be brought into a second state in which the package is unfolded and the panels are situated alongside each other in one plane. The assembly (20) comprises one or more flat stiffening ridges (100) connected by secondary hinges (63-66) to the other main surface of the panel(s) such that each ridge can be moved between a first state in which the ridge is approximately parallel to the panel(s) to which it is attached and a second state in which the ridge projects from the surface of the panel(s) to which it is attached.

## Description

The invention relates to a solar panel assembly comprising a number of rectangular panels each carrying solar cells on one of the two main surfaces, said panels being interconnected by their edges such that the assembly from a first state, in which the panels are folded zigzag wise into a package, can be brought into a second state in which the package is unfolded and the panels are in a row situated alongside each other in one plane.

Such solar panel assemblies are generally known. Typical examples are described as state of the art in US-5,319,905, US-5,520,747 and EP-0,120,662.

Before transport the panels of such a solar panel assembly are folded zigzag-wise into a package of which the length and width correspond approximately with the length and width of one separate panel and of which the thickness corresponds approximately with the thickness of one panel multiplied by the number of panels. In this state the assembly is transported from the earth into an orbit in space. In general the transporting vehicle (rocket, space shuttle, etc.) is able to transport payloads of rather restricted dimensions and restricted weight. Therefore, it is required in general that solar panel assemblies have a low weight and dimensions which should be within certain limits. To maintain a low weight one could use constructions comprising a lot of air and still having a sufficient stiffness and strength, such as for instance honeycomb sandwich panels.

In general the only way to reduce the dimensions of a solar panel assembly is to reduce the thickness of the actual panels. In case honeycomb sandwich constructions are used the only reduction possibility is to reduce the dimensions of the core. The surface, i.e. the length and width of each panel, will be selected as large as possible to obtain a large useful area for locating solar cells.

A too far reduction of the weight may lead to a construction having a too small stiffness. During operation that may lead to harmful bending and torsion movements or oscillating movements of the individual panels or of the assembly as a whole in its extended second state. Such movements may occur for instance in the situation in which the position of the assembly in relation to the carrying satellite has to be corrected.

The object of the invention is now to indicate how the constructive stiffness of the extended solar panel assembly can be improved still allowing the use of relatively thin and lightweight materials for the panels.

In agreement with said object the invention now provides an assembly as described in the first paragraph, characterized in that the assembly comprises one or more flat stiffening ridges connected by secondary hinges to the other main surface(s) of the panels such that each ridge can be moved between a first state in which the ridge is approximately parallel to the panel(s) to which it is attached and a second state in which the ridge projects from the surface of the panel(s) to which it is attached.

It is preferred that the ridges extend approximately perpendicular to the direction of the edges by means of which the adjacent panels are interconnected.

In some cases only one ridge will be sufficient to obtain the desired stiffness for bending, while in general at least two ridges will be necessary to fulfil the stiffness requirement for torsion.

To maintain a stable situation of the stiffening ridges under operating conditions in space it is preferred that the assembly comprises means to maintain the ridges in their active second state once they have reached that state.

The invention will now be explained in more detail with reference to the attached drawings.

Figure 1 illustrates three views on a prior art solar panel assembly. Figure 1a shows the folded situation during transport, figure 1b the situation during unfolding and figure 1c the ultimate extended position during operation in space.

Figure 2 shows an embodiment according to the invention in three different views. Figure 2a illustrates a cross section through a folded assembly, figure 2b illustrates in perspective the panel in the extended state and figure 2c illustrates a cross section through part of the stiffening ridge.

Figure 3 shows a modified embodiment in which some of the resilient ridge sections are replaced by pretensioned Ω-shaped elements.

Figure 4 illustrates an embodiment with two stiffening ridges allowing the omission of the primary hinges. If on the other hand primary hinges are desired then figure 4c illustrates a suitable solution.

Figure 5 illustrates an embodiment in which reflecting panels are added to the assembly whereby not only the actual solar cell carrying panels will have a stiffening ridge, but also the added reflecting panels are embodied with a stiffening ridge.

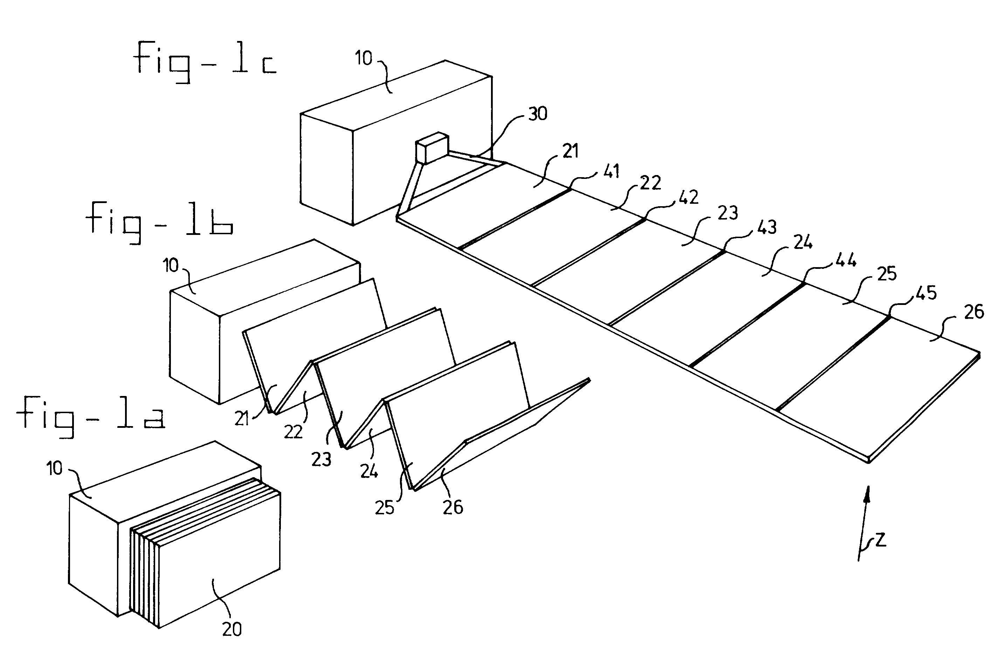

The figures 1a, 1b and 1c illustrate very schematically a satellite 10 comprising a defoldable solar panel assembly 20. Through a coupling mechanism 30 the solar panel assembly 20 is connected to the actual satellite 10.

In figure 1a the situation during transport from the earth to the orbit is illustrated. The solar panel 20 is folded and located directly adjacent to the central body of the satellite 10. In this state the whole assembly occupies only a limited volume and fits in the cargo space of the transport vehicle (rocket, space shuttle, etc.) such that the available space is used optimally.

In figure 1b the situation is illustrated during the refolding operation of the panel 20. It is assumed that the satellite 10 has reached its orbit and has received instructions to refold the assembly 20. In figure 1b the separate panels 21, 22, 23, 24, 25 and 26 of the solar panel assembly are already visible.

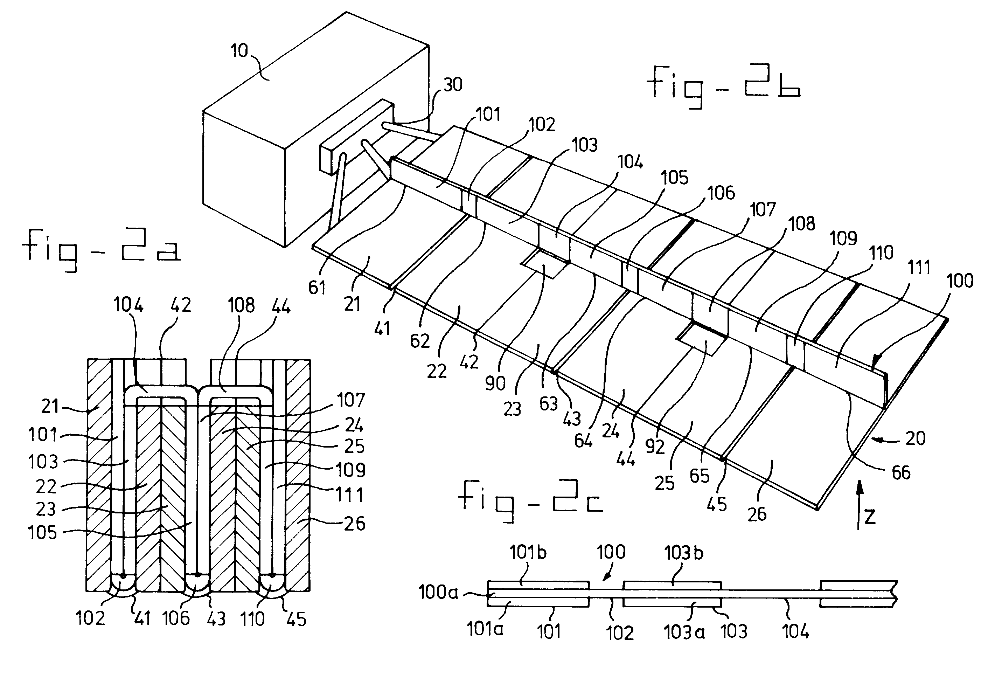

In figure 1c the ultimate situation is illustrated whereby all panels 21, ..., 26 of the solar panel assembly 20 are in one plane. In figure 1c furthermore the hinges between the various panels are indicated with reference numbers 41, 42, 43, 44 and 45. It is assumed in all figures 2a, 2b and 2c that the solar cells are installed at the non visible underside and that the solar radiation impinges on the panel from the direction Z.

As explained above one strives to make the separate panels of the assembly 20 from materials which are as thin as possible to meet the storage volume requirement. A problem with thin panels, however, is that the stiffness of the assembly as a whole is not sufficient anymore to fulfil the requirements. The solution for this problem, provided by the invention, is the addition of one or more stiffening ribs at the surface not occupied by solar cells. An embodiments thereof is illustrated in figure 2.

Figure 2 illustrates in three different views an embodiment of a solar panel assembly according to the invention. In figure 2b the panel assembly 20 is shown comprising the separate panels 21, ..., 26 interconnected by the various primary hinges 41, ..., 45. Through the yoke 30 the assembly 20 is attached to the main body of the satellite 10.

In agreement with the invention a stiffening ridge 100 is hingedly attached to the visible surface of the various panels 21, ..., 26 (notice that the solar cells are attached to the not visible lower surfaces of the various panels). Through a secondary hinge 61 the ridge 100 is connected to panel 21, through a further secondary hinge 62 the ridge 100 is connected to panel 22 and in a similar manner the secondary hinges 63, 64, 65, and 66 are used to attach the ridge 100 to panels 23, 24, 25 and 26 respectively.

In figure 2b the ridge is shown in its second state whereby the ridge is projecting from the various panels 21, ..., 26. Thanks to the use of the secondary hinges 61, ..., 66 the ridge can be brought into its first state, whereby the ridge runs parallel to the various panels 21, ..., 26. In that state it should be possible to refold the whole assembly and for that purpose the ridge is made up of several sections 101, 102, ..., 111. The sections 102, 104, 106, 108 and 110 are made of flexible material and the sections 101, 103, 105, 107, 109 and 111 are made of a stiff material. One possible embodiment of the sectioned ridge 100 is illustrated in figure 2c.

In figure 2c the central part of the ridge 100, indicated by 100a, is made of a flexible material which is at least foldable and preferably also stretchable as will be explained later. The relatively stiff section 101 can be formed by applying stiff platelets to one or both sides of the flexible core material 100a. In figure 2c the platelets 101a and 101b are attached to both sides of the core 100a. In the same manner the stiff section 103 is made by attaching the plates 103a and 103b to both sets of the core 100a, etc. It will be clear that the same procedure is used for sections 105, 107, 109, and 111.

In figure 2a a cross section through the assembly is shown in its folded state. The various hinges 41, ..., 45 should allow some distance between the panels in the folded state such that the sections of the ridge 100 will fit in between. As is visible in figure 2a the two flexible sections 104 and 108 extend across two panels in thickness direction. To allow this either the sections 104 and 108 could be made of a flexible and also stretchable material, or, as is the illustrated situation, a cut out 90 has to made in the panels 22 and 23 and a further cut out 92 has to be made in the panels 24 and 25. In the folded situation these (relatively small) cut outs receive the flexible sections 104 and 108 of the core 100a of the ridge 100. As already said, if the core 100a is made of a material which is not only flexible and foldable but also stretchable, then the cut outs 90 and 92 can be omitted because in that case the sections 104 and 108 will stretch around the sides of the non cut panels.

Although different types of hinges are applicable it is preferred to use a piano hinge. On the other hand strips of a flexible material can be used for realizing the hinges 41, ..., 45. Preferably the flexible material is prestressed or pretensioned or the hinge construction is such that it strives to a situation in which both panels, attached to a hinge, are positioned in one plane. In other words, because of the pretensioning of the hinges 41, ..., 45 the whole assembly strives to obtain the unfolded state as illustrated in figure 2b.

Preferably the secondary hinges 61, ..., 66 are also made of a strip of pretensioned or prestressed material such that these hinges strive to obtain the situation illustrated in figure 2b whereby the ridge 100 extends from the panels 21, ..., 26.

It will be clear that the ridge 100 not necessarily has to extend as one ridge across all panels 21, ..., 26. Also embodiments wherein two ridges or even more ridges extend across (some of) the panels fall within the scope of the invention. If for instance the cut outs 90 and 92 are considered unacceptable then an embodiment with three mutually aligned ridges could be used, the first ridge comprising the sections 101, 102 and 103, the second ridge comprising the sections 105, 106, 107, and the third ridge comprising the sections 109, 110, 111.

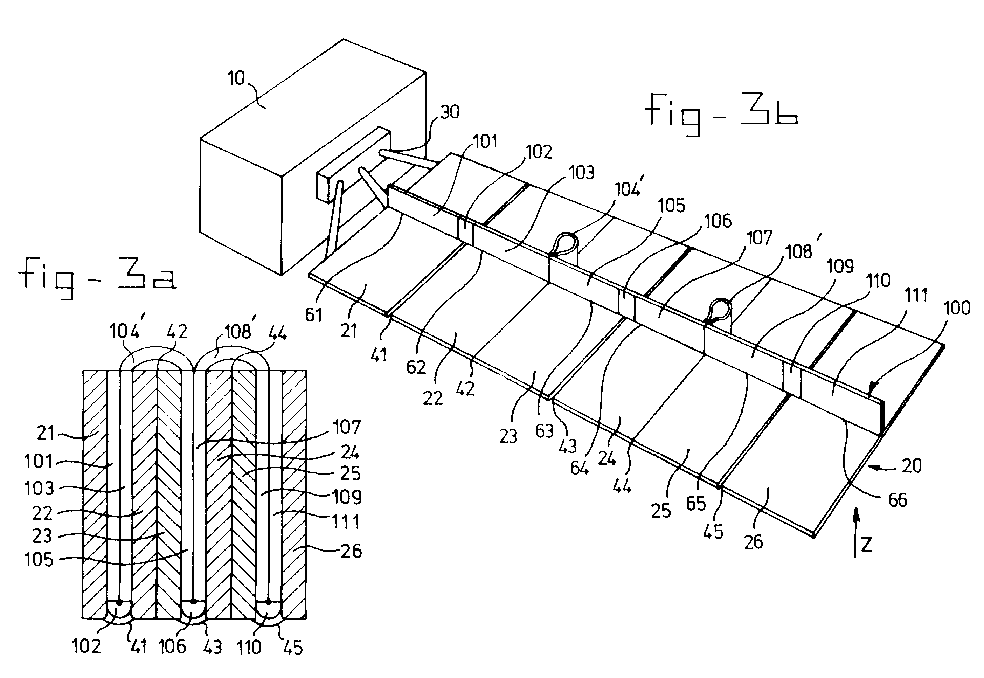

Figure 3 illustrates a modified embodiment which shows a lot of resemblance with the embodiment illustrated in figure 2. In fact for most parts the same reference numbers are used. The only difference resides in the way in which the flexible portions of the ridge 100 are embodied. The flexible portions 102, 106, and 110 are made in the same way as discussed with reference to figure 2. The remaining flexible sections 104' and 108', however, are different. In the embodiment illustrated in figure 3b the sections 104' and 108' are Ω-shaped hinges made of a flexible resilient material such as spring steel, etc. In their non-tensioned or non-stressed state these hinges 104' and 108' remain their Ω-shape, however, they are flexible enough to allow bending into a shape as illustrated in figure 3a.

In figure 3a the whole solar panel assembly is shown in its folded state (ready for transport). The hinges 104' and 108' extend across the thickness of the panels 22, 23, and 24, 25. In contrast with figure 2 no cut outs in the panels (such as 90 and 92 in figure 2) are necessary. The Ω-shape of the hinges 104' and 108' provide a sufficient length to cross the thickness of the panels 22, 23, and 24, 25 in the illustrated manner.

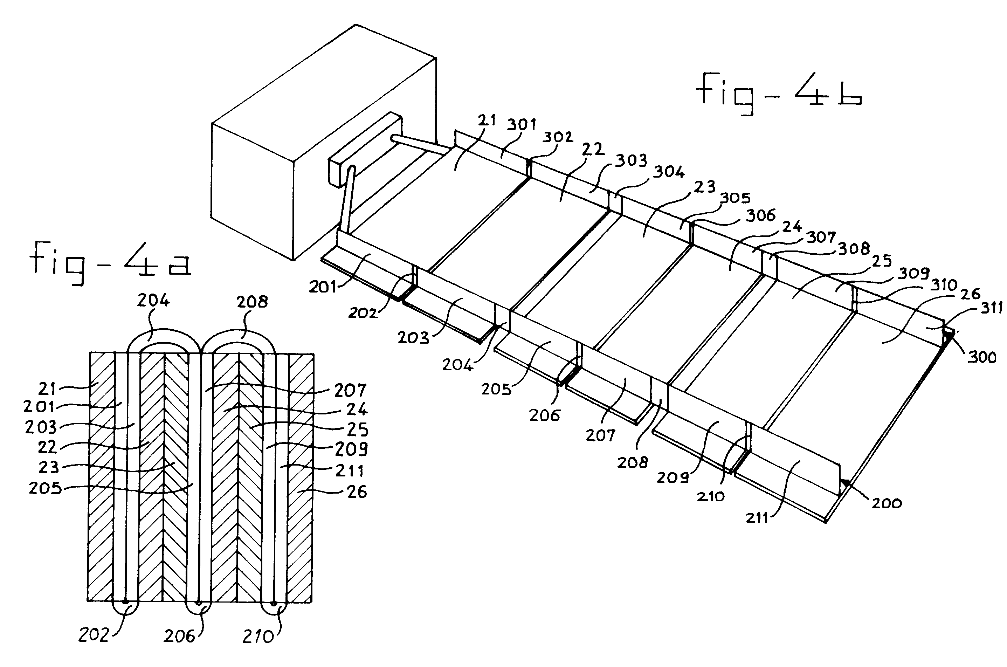

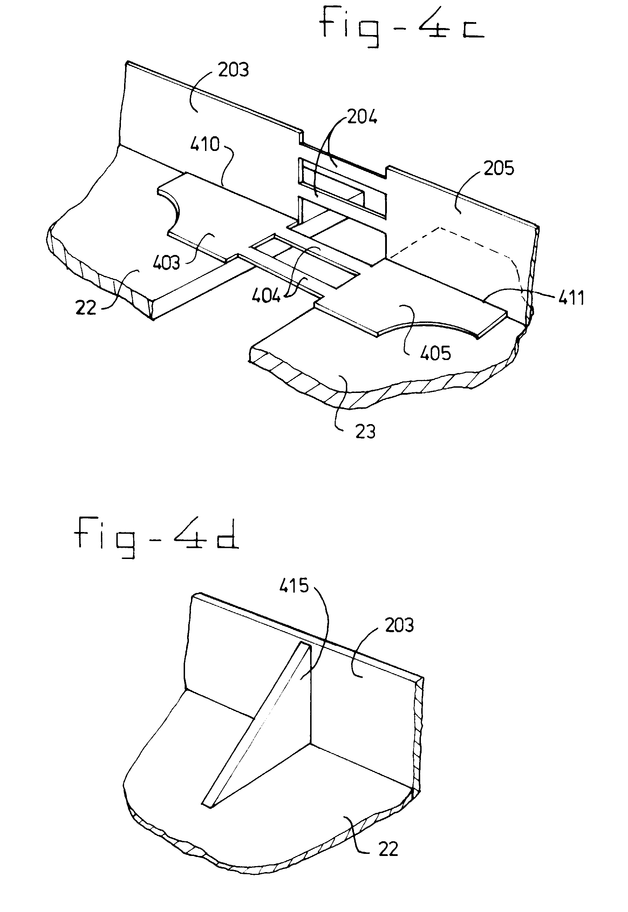

A further embodiment of a solar panel assembly according to the invention is illustrated in figure 4. Figure 4b shows an embodiment with 6 solar panels 21, ..., 26 connected to two upstanding ridges 200 and 300. The various solar panels 21, ..., 26 are not interconnected by primary hinges. They are only connected by means of secondary hinges to the various sections of the upstanding ridges 200 and 300. To avoid crowding by reference numbers the secondary hinges are not indicated by separate reference numbers in figure 4b.

Figure 4a illustrates the assembly in the folded state, whereby the cross section is taken through the ridge 200.

Each of the solar panels 21, ..., 26 is, by means of the respective sections of the two upstanding ridges 200 and 300 connected to its neighbouring solar panel(s), so that in fact no primary hinges are necessary. Because there are no primary hinges the intermediate distances between the various solar panels can be varied which allows the various flexible sections 202, 204, 206, 208, 210 of ridge 200 and 302, 304, 306, 308, 310 of ridge 300 to become straightened in the unfolded operative state illustrated in figure 4b.

If for whatever reason it is felt that hinges between the solar panels 21, ..., 26 are necessary then a special type of hinge is proposed, illustrated in figure 4c.

Figure 4c illustrates the combination of a primary hinge (parts 403, 404, 405) two secondary hinges (parts 410, 411) and a flexible ridge section (part 204). Figure 4c illustrates small parts of solar panels 22 and 23 as well as small parts of the sections 203, 204, and 205 of the upstanding ridge 200. The flexible section 204 of upstanding ridge 200 is in this embodiment represented by two strips 204 of a very thin, flexible and strong material, for instance thin spring steel. These strips 204 are in a suitable manner connected to the relatively stiffer sections 203 and 205 of the ridge 200. The way in which the strips 204 are attached to the sections 203 and 205 is not illustrated specifically in figure 4c. In figure 4c it is assumed that in the same manner as in figure 2c the ridge is made of a central core of a flexible very thin material, whereby the stiffer sections are made by adding platelets to both sides of the central core. These platelets are not shown in figure 4c.

One of the primary hinges between solar panel 22 and 34 is shown and comprises the parts 403, 404, and 405. The parts 403 and 404 are attached to the solar panels in a suitable manner. The actual hinging section 404 is in the same manner as the flexible section 204 made as two strips extending between the mounting sections 403 and 405. The whole combination of the parts 403, 404, and 405 can be made from one piece of very thin flexible spring steel.

Preferably the parts 204 and 404 are made as metallic spring leaves of the type described in the publication "Self Actuating Damped Hinge" by Alain Donzier and Jacques Sicre (Metravib 1997).

As illustrated in figure 4c a hinge connection 410 is made between part 403 and ridge section 203 and a further hinge connection 411 is made between part 405 and ridge section 205. The hinge connections 410 and 411 function as secondary hinges.

Although spring steel is mentioned as material for the various parts illustrated in figure 4c, it will be clear that other suitable materials are available such as various plastics, composites, etc.

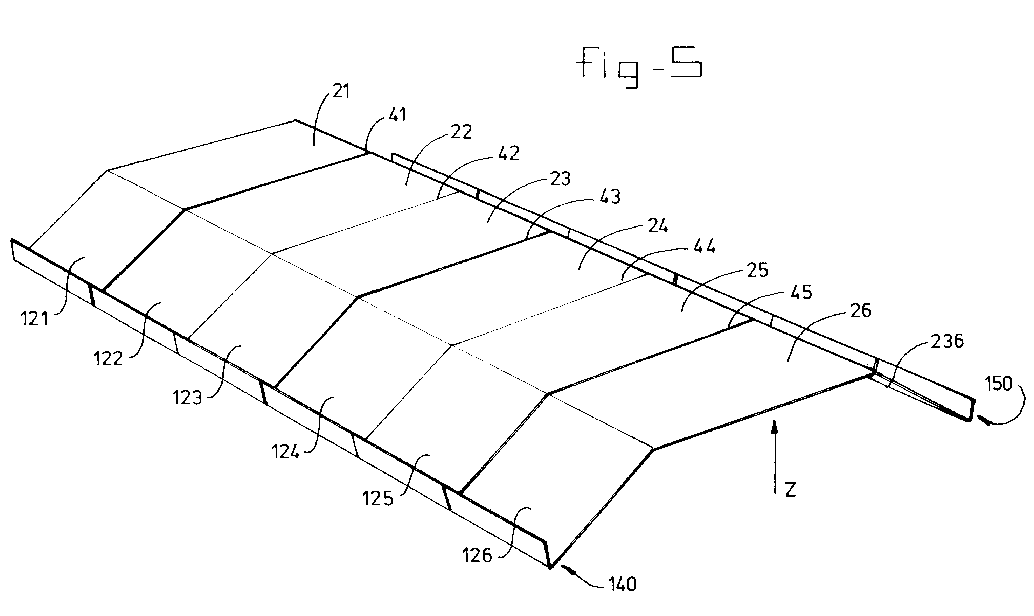

Figure 5 illustrates a further embodiment of a solar panel according to the invention whereby reflecting panels are added to the assembly. The assembly as already discussed comprises the panels 21, ..., 26 interconnected by the primary hinges 41, ..., 45.

In the manner as illustrated in figure 5 a reflecting panel 121 is hingedly attached to panel 21 through a further hinge 141, a reflecting panel 122 is hingedly attached to panel 22 through a further hinge 142, ..., and a reflecting panel 126 is hingedly attached to panel 26 through a further hinge 146. Further reflecting panels are hingedly attached to the other sides of the panels 21, ..., 26 and from these reflecting panels only panel 236 is visible in figure 3. The various hinges are not indicated by reference numbers in figure 3 to avoid crowding by numbers.

The reflecting panels 121, ..., 126, and 231, ..., 236 (of which only 236 is visible) carry at their downwards facing surfaces light reflecting material. By choosing a suitable angle between the reflecting panels and the solar cell carrying panels 21, ..., 26 light, impinging from the direction Z onto these reflecting panels will be reflected and reach the solar cells on the downwards faced surfaces of the panels 21, ..., 26. Assuming that the reflecting surface of each reflecting panel is approximately equal to half the surface of each solar cell carrying panel, the amount of light impinging on each solar cell carrying panel is significantly increased. More light means more power generated by the solar cells.

Because each reflecting panel is through a hinge connected to a solar cell carrying panel and extends under an angle with the solar cell carrying panel, each reflecting panel in fact acts as a stiffening ridge. Especially in case the various reflecting panels 121, ..., 126 are interconnected in some way. A suitable interconnection can be obtained through a stiffening ridge 140. The various sections of the stiffening ridges are not separately indicated by reference numbers to avoid overcrowding of the figure by reference numbers. In the same manner as in figures 2, 3 or 4 the ridge 140 is made of sections having a different stiffness to allow folding and refolding of the assembly. Flexible elements of the type illustrated in figure 4c are preferred. Preferably the dimensions are selected such that in the folded situation one reflecting panel and its attached section of the stiffening rib occupies only half the surface of the corresponding panel.

Preferably, the assembly comprises means to maintain the ridges in their active second state once they have reached that state. Just an example of such means is illustrated in figure 4d. It comprises a triangular element 415 which in one way or another is attached to ridge 203 and to panel 22. Developing practical embodiments of this type of fixation means is considered within reach of the expert reader and therefore no further details will be provided.

## Claims

1. Solar panel assembly comprising a number of rectangular panels each carrying solar cells on one of the two main surfaces, said panels being interconnected by their edges such that the assembly from a first state, in which the panels are folded zigzag wise into a package, can be brought into a second state in which the package is unfolded and the panels are in a row situated alongside each other in one plane, characterized in that the assembly comprises one or more flat stiffening ridges connected by hinges to the other main surface of the panel(s) such that each ridge can be moved between a first state in which the ridge is approximately parallel to the panel(s) to which it is attached and a second state in which the ridge projects from the surface of the panel(s) to which it is attached.

2. Solar panel assembly according to claim 1, characterized in that the ridges extend approximately perpendicular to the direction of the edges by means of which the adjacent panels are interconnected.

3. Solar panel assembly according to claim 1 or 2, characterized in that the assembly comprises two or more mutually parallel stiffening ridges.

4. Solar panel assembly according to one of the preceding claims, characterized in that at least part of the panels are interconnected by primary hinges.

5. Solar panel assembly according to claim 4, characterized in that the primary hinges are pretensioned or prestressed such that they strive to obtain a position in which both panels connected to a primary hinge are positioned in one plane.

6. Solar panel assembly according to claim 4 or 5, characterized in that the assembly comprises only one ridge extending across all panels of the assembly and comprising flexible or foldable sections to allow, after bringing the ridge in its first state, folding of the panels of the assembly into a package.

7. Solar panel assembly according to one of the preceding claims, characterized in that the hinges through which the ridges are connected to the panels, further indicated as the secondary hinges, are pretensioned or prestressed such that they strive to obtain a position in which the respective ridge and panel define an angle of approximately 90°.

8. Solar panel assembly according to one of the preceding claims, characterized in that the assembly comprises further reflecting panels, connected by means of further hinges to the sides of the solar cell carrying panels and extending under an angle with said solar cell carrying panels such that these reflecting panels also function as stiffening ridges.

9. Solar panel assembly according to claim 6, characterized in that separate stiffening ridges are connected through secondary hinges to said reflecting panels.

10. Solar panel assembly according to any of the preceding claims, characterized in that the assembly comprises means to maintain the ridges in their active second state once they have reached that state.
